# Europäisches Patentamt

## European Patent Office

## Office européen des brevets

(19)

(11) Publication number: **0 011 992**
**B1**

(12) **EUROPEAN PATENT SPECIFICATION**

(45) Date of publication of patent specification: **26.01.83**

(51) Int. Cl.³: **F 16 B 7/00**

(21) Application number: **79302673.3**

(22) Date of filing: **22.11.79**

(54) A profile system having support members and beams.

(30) Priority: **29.11.78 NO 784009**

(43) Date of publication of application:
**11.06.80 Bulletin 80/12**

(45) Publication of the grant of the patent:
**26.01.83 Bulletin 83/4**

(84) Designated Contracting States:
**CH DE FR GB SE**

(56) References cited:
**BE - A - 722 708**
**DE - U - 7 522 584**
**FR - A - 1 218 379**
**FR - A - 2 323 908**
**GB - A - 1 195 369**

(73) Proprietor: **NORSK HYDRO a.s.**
**Bygdoy allé 2**
**N-Oslo 2 (NO)**

(72) Inventor: **Lande, Harald**
**Buvik**
**N-4262 Avaldsnes (NO)**
Inventor: **Johannessen, Leif**
**N-4525 Konsmo (NO)**

(74) Representative: **Baldock, Hugh Charles et al,**
**Lloyd Wise, Tregear & Co. Norman House 105-109 Strand**
**London, WC2R 0AE (GB)**

Courier Press, Leamington Spa, England.

## A profile system having support members and beams

This invention relates to a profile system comprising support members and beams, which are joined by a joining element with a cooperating wedge. The profile system is especially applicable in frame works scaffolds and other constructions where one of the profiles is supported by its front part alongside the other profile.

Known profile systems of this type often use joining elements which occupy a cavity in one or each of the profiles, and are fastened by means of bolts or screws to the members and beams. Another known joining method is based upon expansion of the joining element, for example by means of a screw which presses apart split parts of the element to lock against the cavity walls.

A common drawback for known profile systems is the complicated and laborious manufacture and assembling of the joining elements which requires strict limits regarding tolerances and working. Further, it is necessary to provide openings in the outer walls of the profiles for fastening of screws, bolts, etc., which openings are left open in such way that dirt and humidity can penetrate the profiles and cause corrosion damage. Such holes can also disfigure the construction.

Previous attempts to use joining elements utilizing wedge effect based only upon the friction resistance did not result in a sufficiently safe connection. As a consequence, glue or some other auxiliary fastening mechanism was often used to secure the joining elements. One such attempt is disclosed in BE-A-722,708. In this Patent, a joining element is described which has two wings, each being adapted to extend within one of two members to be joined together. Each wing has an inclined surface against which a wedge is urged to lock the respective wing in one or other of the members. The system however does have a primary disadvantage in that the locking of one wing in one of the members will tend to release the other wing in the other member. Two wedges are required which must be locked simultaneously, or substantially so, if proper securement is to be obtained.

The present invention is directed to a profile system using the wedge principle which, without requiring an auxiliary fastening mechanism, provides a simple, versatile and safe connection between two profiles.

According to the invention, a profile system having support members, beams and joining elements therefore utilizes a locking member comprising two wings for extending respectively within the member and beam to be joined, one wing having a projection for engaging a groove in the wall of one of the member and beam and the other wing having an inclined surface for receiving a wedge for locking same within the other of the member and beam.

The advantage of the system according to the invention is its simple form and application which gives a surprisingly good mechanical strength. The preferred system is characterized by its versatility which allows joining any place along the beam independent of pre-perforated openings. The main components comprised in the system are manufactured as extruded profiles, preferentially of aluminium or aluminium alloys.

An embodiment of the invention will now be described by way of example and with reference to the accompanying drawings, wherein:

Figure 1 shows in perspective view a partial section through a joint between two beams and one support member utilizing two joining elements, and

Figure 2 is a sectional view through a joint between a beam and a support member.

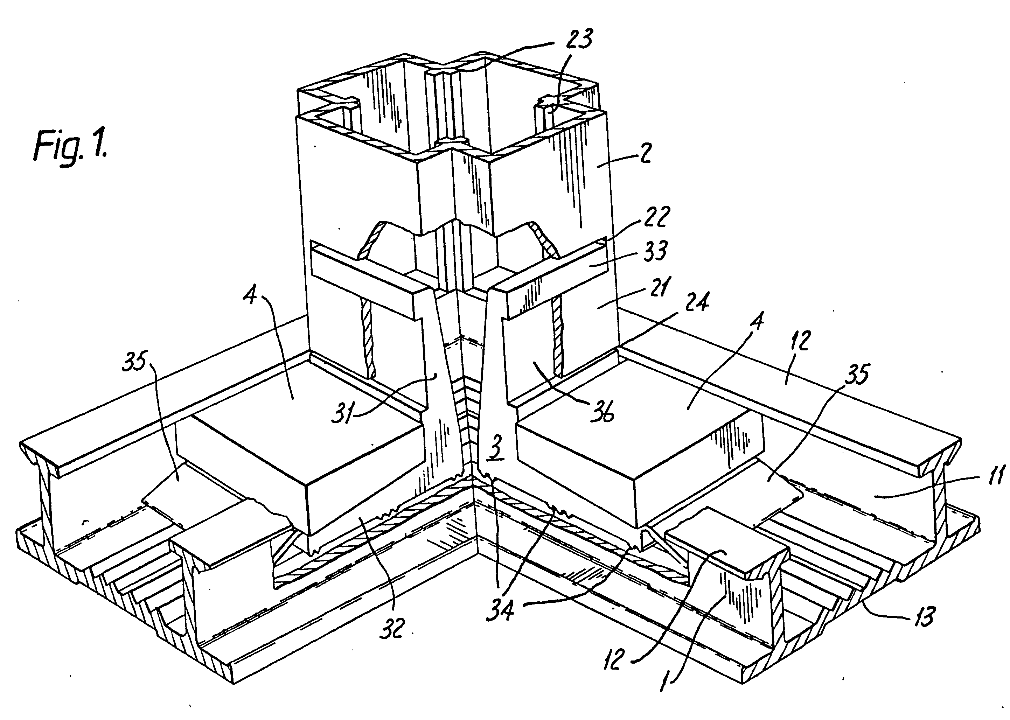

The joining element in Figure 1 is shaped as an angular fastening bracket 3 with two wings 31, 32. One of the wings 31 is provided with a projection 33 which co-operates with a groove 22 in profile wall 21 of the support member 2. The other wing 32 has its outer surface, which turns towards an U-shaped channel 11 in the beam 1, provided with rills 34. The rills run perpendicular to the corresponding rills which forms an arched bottom 13 of the channel 11. The wing is terminated by a bendable flap 35 which forms an integral part of the bracket 3. Other sections for the beam may also be used.

The support member 2 is of hollow section having a substantially square cross-section and its front part 24 being located alongside the beam 1 in such way that the support member stops at right angle against two outward running flanges 12 on the beam. The flanges make a combined support area for the support member and a lock plane against a wedge 4 which is used for fastening the bracket 3 to the beam. The section of the support member 2, is not critical and may for example, also be U-shaped.

The wings of the bracket are inserted in the support member and beam respectively. A suitable shape of the wing 31 with a downward increasing cross-section secures the self-locking of the bracket in the support member when the projection 33 is placed in the groove 22.

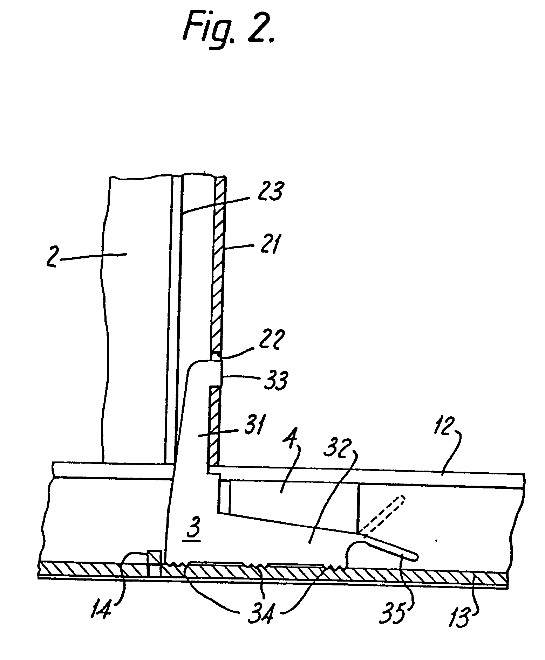

Two guiding flanges 23 inside the support members wall 21, which flanges run parallel to its longitudinal axis, facilitate insertion of the bracket and at the same time secure that the bracket is not pressed out of position during insertion of the wedge 4. The wedge locks the bracket's wing 32 in the beams U-shaped channel 11 and the wedge itself is secured against sliding by the end flap 35 which is bent upward as indicated in Figure 2.

Figure 2 shows an alternative form of the base 13 of the beam which is provided with a retaining projection 14. The retaining projection will further facilitate assembly in the case where the joining points have been determined in advance and further allows application of support members of simplified forms.

The invention is not confined to the above described embodiments. The support member which is shown in Figure 1 as a hollow profile can be replaced by other appropriate formed profile, e.g. an U-profile.

## Claims

1. A profile system having support members (2) and beams (1), and a joining element (3) for locking a support member (2) to a beam (1), the joining element (3) comprising two inclined wings (31, 32) for extending respectively within a member (2) and beam (1), one wing (32) having an inclined surface for receiving a wedge (4) for locking same within one of the member and beam, characterized in that the other wing (31) has a projection (33) for engaging a groove (22) in the wall (21) of the other of the member and beam.

2. A profile system according to Claim 1 characterized in that the support member (2) is formed as a hollow section having two guide flanges (23) on the inside of its lateral walls (21), which flanges run parallel to the longitudinal axis of the member (2).

3. A profile system according to Claim 1 or Claim 2, characterized in that the beam (1) comprises a channel section (11) with an outward running flange (12) on either side beneath which the element (3) is adapted to be received, the flanges (12) defining an upper support area for the support member (2) and a lower lock face for the wedge (4).

4. A profile system according to any preceding Claim characterized in that said other wing (32) has a bendable end flap (35) for locking a said wedge (4) in place.

## Revendications

1. Système de profilés comprenant des éléments supports (2) et des poutres (1) ainsi qu'un élément de jonction (3) destiné à verrouiller un élément support (2) sur une poutre (1), l'élément de jonction (3) comprenant deux ailes inclinées (31, 32) destinées à s'étendre respectivement dans un élément (2) et dans une poutre (1); une aile (32) ayant une surface inclinée destinée à recevoir un coin (4) afin de verrouiller cette aile dans l'un des composants constitués par l'élément et la poutre, caractérisé en ce que l'autre aile (31) présente une saillie (33) destinée à s'engager dans une rainure (22) ménagée dans la paroi (21) de l'autre des composants constitué par l'élément et la poutre.

2. Système de profilés suivant la revendication 1, caractérisé en ce que l'élément support (2) est réalisé sous la forme d'une section creuse ayant deux nervures de guidage (23) à l'intérieur de ces parois latérales (21), rainures que s'étendent parallèlement à l'axe longitudinal (2).

3. Système de profilés suivant la revendication 1 ou la revendication 2, caractérisé en ce que la poutre (1) est constituée par une section en canal (11) ayant une nervure (12) qui s'étend vers l'extérieur sur chaque côté au-dessous de laquelle l'élément (3) est adapté pour se loger, les nervures (12) définissant une surface support supérieure pour l'élément support (2) et une face de verrouillage inférieure pour le coin (4).

4. Système de profilés suivant une revendication précédente quelconque, caractérisé en ce que ladite autre aile (32) présente un volet d'extrémité repliable (35) pour verrouiller un coin (4) en place.

## Patentansprüche

1. Profilsystem mit Stützelementen (2) und Trägern (1) sowie einem Verbindungselement (3) zur Verblockung eines Stützelements (2) mit einem Träger (1), wobei das Verbindungselement (3) zwei einen Winkel einschließende Schenkel (31, 32) zur Erstreckung innerhalb eines Elements (2) bzw. eines Trägers (1) umfaßt une einer der Schenkel (32) eine geneigte Fläche zur Aufnahme eines Keils (4) für die Verblockung desselben in dem einen von Element und Träger aufweist, dadurch gekennzeichnet, daß der andere Schenkel (31) einen Vor-sprung (33) für den Eingriff in einen in der Wand (21) des anderen von Element und Träger vorhandenen Einschnitt (22) aufweist.

2. Profilsystem nach Anspruch 1, dadurch gekennzeichnet, daß das Stützelement (2) als Hohlprofil mit zwei Führungsflanschen (23) auf der Innenseite seiner Seitenwände (21) ausgebildet ist, wobei die Flansche parallel zur Längsachse des Elements (2) verlaufen.

3. Profilsystem nach Anspruch 1 oder 2, dadurch gekennzeichnet, daß der Träger (1) ein U-Profil (11) mit einem nach außen verlaufenden Flansch (12) auf jeder Seite umfaßt, unter dem das Element (3) aufnehmbar ist, wobei die Flansche (12) einen oberen Trägerbereich für das Stützelement (2) und eine untere Verblockungsfläche für den Keil (4) bestimmen.

4. Profilsystem nach einem der vorstehenden Ansprüche, dadurch gekennzeichnet, daß der andere Schenkel (32) eine umbiegbare Endklappe (35) zur Verriegelung des Keils (4) in Stellung aufweist.

Fig. 1.

0011992

# Fig. 2.

2